# EUROPÄISCHE PATENTSCHRIFT

(11) **EP 2 367 083 B1**
(45) Veröffentlichungstag und Bekanntmachung des Hinweises auf die Patenterteilung: **05.10.2016**
(21) Anmeldenummer: 10002949.5
(22) Anmeldetag: 19.03.2010
(51) Int. Cl.: G05B 19/042

(54) **Vorrichtung zur Erstellung eines Programms für eine speicherprogrammierbare Steuerung, Programmiereinrichtung und Verfahren zur Programmierung einer speicherprogrammierbaren Steuerung**
Device for creating a program for a memory programmable control device, programming device and method for programming a memory programmable control device
Dispositif de création d'un programme pour une commande programmable par mémoire, dispositif de programmation et procédé de programmation d'une commande programmable par mémoire

(43) Veröffentlichungstag der Anmeldung: 21.09.2011
(73) Patentinhaber: SICK AG, 79183 Waldkirch/Breisgau (DE)
(72) Erfinder: Koepcke, Oliver, 79395 Neuenburg (DE); Weddingfeld, Klaus, 79183 Waldkirch (DE)
(74) Vertreter: Manitz, Finsterwald & Partner GbR

(56) Entgegenhaltungen:
- WO-A1-00/38040
- DE-A1-102008 002 266
- US-A1- 2002 194 218
- SIEMENS: "Safety Integrated Systemhandbuch Sicherheitstechnik" SAFETY INTEGRATED, 2005, Seiten 7.10-7.17, XP002599986 Germany
- SIEMENS: "SIMATIC, SAFETY MATRIX, CONFIGURATION MANUAL" SIMATIC, Februar 2010 (2010-02), Seiten 17-23, XP002599987 Germany
- ROBERT MARTINEZ ET AL: "The Importance of Single-Source Engineering of Emergency and Process Shutdown Systems" 1. Januar 2005 (2005-01-01), COMPUTER SAFETY, RELIABILITY, AND SECURITY LECTURE NOTES IN COMPUTER SCIENCE;;LNCS, SPRINGER, BERLIN, DE, PAGE(S) 13 - 23 , XP019020989 ISBN: 978-3-540-29200-5 * das ganze Dokument *
- DRATH R ET AL: "Computer-aided design and implementation of interlock control code" INTELLIGENT CONTROL, 2006 IEEE INTERNATIONAL SYMPOSIUM ON, IEEE, PI, 4. Oktober 2006 (2006-10-04), Seiten 2653-2658, XP031420468 ISBN: 978-0-7803-9797-2

## Beschreibung

Die Erfindung betrifft eine Vorrichtung zur Erstellung eines Programms für eine speicherprogrammierbare Steuerung mit mehreren Ein- und Ausgängen, die eine Programmiereingabeeinheit mit einer Anzeigeeinheit zur Auswahl und Zusammenstellung von mehreren Symbolen und eine Erstellungseinheit zur Erstellung eines Programmcodes für die speicherprogrammierbare Steuerung aus einer auf der Anzeige der Programmiereingabeeinheit zusammengestellten Anordnung von Symbolen umfasst, mit den Merkmalen des Oberbegriffs des Anspruchs 1. Die Erfindung betrifft weiterhin eine Programmiereinrichtung für eine speicherprogrammierbare Steuerung mit einer solchen Vorrichtung zur Erstellung eines Programms, ein entsprechendes Verfahren zur Programmierung einer speicherprogrammierbaren Steuerung mit den Merkmalen des Oberbegriffs des Anspruchs 9 und ein Computerprogrammprodukt zur Verwendung mit einer solchen Vorrichtung, einer solchen Programmiereinrichtung bzw. einem solchen Verfahren.

Automatisierungslösungen werden heutzutage größtenteils über programmierbare Logikbaugruppen realisiert. Teilprobleme werden in separaten Programmmodulen (Blätter, Funktionsbausteine, Makros) programmiert und in überlagerten Einheiten genutzt.

Insbesondere für Sicherheitssteuerungen kommen speicherprogrammierbare Steuerungen (SPS) zum Einsatz, die entsprechend den Anforderungen programmiert werden. An den Eingängen einer solchen Sicherheitssteuerung liegen im Betrieb Signale von Gebern, zum Beispiel bestimmten Sensoren wie Bewegungsmeldern, Lichtschranken oder ähnliches an. Die Ausgänge der Sicherheitssteuerung sind mit Aktoren verbunden, die - abhängig von den an den Eingängen anliegenden Signalen der Geber - bestimmte Prozesse auslösen. So kann zum Beispiel eine Sicherheitssteuerung dazu vorgesehen sein, dass bei einem entsprechenden Eingangssignal eine Maschine abgeschaltet wird oder ein Warnsignal ausgegeben wird.

Bei einem aus EP 1 362 269 B1 bekannten Verfahren werden im Rahmen eines Programmiervorgangs jeweils benötigte Programmmodule ausgewählt und zu einem Programm zusammengestellt, welches für den Betrieb einer Sicherheitssteuerung geeignet ist. Um die Übersichtlichkeit beim Programmieren zu erhöhen und Programmierfehler zu vermeiden, werden die auswählbaren Programmmodule auf einem ersten Teil einer Anzeigeoberfläche dargestellt und beispielsweise mittels Drag-and-Drop in einem anderen Bildschirmbereich zusammengestellt, der einer Programmieroberfläche entspricht.

EP 2 012 201 A1 beschreibt ein Verfahren zum Programmieren einer mit Gebern und Aktoren zu verschaltenden Sicherheitssteuerung, bei der zunächst ein Verdrahtungsplan erstellt wird. Die Sicherheitssteuerung wird mit ihren Anschlussklemmen schematisch auf einer graphischen Programmieroberfläche dargestellt. Geber und Aktoren werden anhand von Geber- und Aktorsymbolen ausgewählt. Verdrahtungssymbole werden auf der Programmieroberfläche dargestellt, welche die Geber- und Aktorsymbole mit den ihnen zugeordneten Anschlussklemmen verbinden. Mit diesen Informationen wird ein Programm für die Sicherheitssteuerung erstellt, wobei automatisch Programmteile aktiviert und/oder zusammengestellt werden, die für die Auswertung der ausgewählten Geber und die Ansteuerung der ausgewählten Aktoren vorgesehen sind. Diesen Programmteilen werden automatisch Parameter zugeordnet, welche denjenigen Anschlussklemmen entsprechen, mit denen die jeweiligen Geber- und Aktorsymbole verbunden sind.

Mit Hilfe solcher Programmierverfahren oder zum Beispiel in der Norm DIN EN 61131-3 beschriebener Programmiersprachen (beispielsweise FBS - "Funktionsbausteinsprache" entsprechend FUP - "Funktionsplan" (englisch FBD - "function block diagram"); KOP - "Kontaktplan" (englisch LD - "ladder diagram"); AWL - "Anweisungsliste" (englisch IL - "instruction list"); ST - "strukturierter Text" (englisch ST - "structured text")) lässt sich das Programm für eine speicherprogrammierbare Steuerung anhand graphischer Symbole intuitiv erstellen. Graphische Symbole beschreiben dabei unter anderem Gebereingänge und Aktorausgänge bzw. anzuschließende Geber und Aktoren. Mit dieser Information ist auch bereits festgelegt, wie die jeweiligen Ein- und Ausgänge der speicherprogrammierbaren Steuerung konfiguriert werden müssen, um mit den jeweiligen Gebern und Aktoren kommunizieren zu können.

Verwendete Programmmodule sind zum Beispiel vorprogrammierte Blätter, Funktionsbausteine oder Makros, die in einer Programmbibliothek abgelegt sein können. Programmmodule können auch durch logische Verknüpfungen wie AND, OR, XNOR etc. gebildet sein.

Durch diese Art der Programmierung und durch die zunehmende Komplexität kann jedoch die Übersichtlichkeit verloren gehen.

Insbesondere bei komplexen Anwendungen mit einer hohen Anzahl von logischen Zwischengrößen kann es dabei schwierig werden, nachzuvollziehen, welche Eingänge der Sicherheitssteuerung mit welchen Ausgängen der Sicherheitssteuerung wechselwirken. Insofern ist es oftmals schwierig zu erkennen, auf welche Ausgänge der Sicherheitssteuerung die Änderung eines Signals an einem bestimmten Eingang der Sicherheitssteuerung Einfluss hat. Um die Zusammenhänge zwischen den Eingängen und den Ausgängen der speicherprogrammierbaren Steuerung darzustellen, ist es notwendig, einen oftmals mehrseitigen Logik-Bericht zu erstellen und auszuwerten.

In SIEMENS: "Safety Integrated Systemhandbuch Sicherheitstechnik", SAFETY INTEGRATED 2005, Seiten 7.10 bis 7.17 ist für die Programmierung in der Fertigungsautomatisierung die Verwendung von Standardsprachen wie zum Beispiel "Kontaktplan" oder "Funktionsplan" vorgesehen. Für die Projektierung in der Prozessautomatisierung wird zur Programmierung entweder CFC (Continuous Function Chart) oder eine SIMATIC Safety Matrix vorgeschlagen.

In SIEMENS: "SIMATIC, SAFETY MATRIX, CONFIGURATION MANUAL", SIMATIC, Februar 2010, Seiten 17 bis 23, ist beschrieben, dass ein mit CFC erstelltes Programm mit Hilfe einer CFC-Dokumentation dargestellt werden kann, oder ein Programm mit einer Matrix erstellt und dargestellt werden kann.

Aufgabe der vorliegenden Erfindung ist es, eine Vorrichtung zur Erstellung eines Programms für eine speicherprogrammierbare Steuerung, eine Programmiereinrichtung für eine speicherprogrammierbare Steuerung bzw. ein Verfahren zur Programmierung einer speicherprogrammierbaren Steuerung anzugeben, mit deren Hilfe es möglich ist, auf einfache und übersichtliche Weise die Beeinflussung der Signale an den Ausgängen der speicherprogrammierbaren Steuerung durch die Signale an den Eingängen speicherprogrammierbaren Steuerung zu erkennen.

Diese Aufgabe wird mit einer Vorrichtung zur Erstellung eines Programms für eine speicherprogrammierbare Steuerung mit den Merkmalen des Anspruches 1 gelöst. Unteransprüche sind auf bevorzugte Ausführungsformen gerichtet.

Insbesondere ist erfindungsgemäß eine Ermittlungseinheit vorgesehen, mit der die aus dem erstellten Programmcode oder der auf der Anzeigeeinheit der Programmiereingabeeinheit zusammengestellten Anordnung von Symbolen resultierende mögliche Einflussnahme von Eingangssignalen, die von den Gebereingängen an die speicherprogrammierbare Steuerung geliefert werden, auf Ausgangssignale, die von der speicherprogrammierbaren Steuerung an die Aktorausgänge geliefert werden, ermittelt werden. Der Begriff "mögliche Einflussnahme" soll dabei angeben, welche Eingänge der speicherprogrammierbaren Steuerung gemäß dem Programmcode oder der auf der Anzeigeeinheit zusammengestellten Anordnung von Symbolen auf welche Ausgänge der speicherprogrammierbaren Steuerung Einfluss haben können, wenn das mit Hilfe der erfindungsgemäßen Vorrichtung erstellte Programm in der speicherprogrammierbaren Steuerung zum Einsatz kommt. Der Begriff "mögliche Einflussnahme" soll also nicht derart verstanden werden, dass auch notwendigerweise die Art und Weise der Beeinflussung gemeint ist, sondern nur, ob unter Berücksichtigung des erstellten Programms überhaupt eine Beeinflussung stattfinden kann.

Erfindungsgemäß ist weiterhin eine Umsetzungseinheit vorgesehen, mit deren Hilfe diese mögliche Einflussnahme in eine Matrix umgesetzt werden kann. Eine Anzeigeeinheit dient der Darstellung dieser Matrix.

Mit Hilfe der erfindungsgemäßen Vorrichtung ist es also für den Nutzer auf einfache Art und Weise möglich, zu erkennen, welche Eingänge der speicherprogrammierbaren Steuerung Einfluss auf welche Ausgänge haben. Der Benutzer der Steuerung erhält also einen schnellen Überblick über die Zusammenhänge ohne dass ein aufwändiger Logik-Bericht ausgewertet werden müsste.

Insbesondere bei der Verwendung für eine speicherprogrammierbare Sicherheitssteuerung ist dies von besonderem Vorteil. Gerade hier ist es von großer Bedeutung, dass die Zusammenhänge schnell erfasst werden können und mögliche Fehlerquellen vermieden werden, die aufgrund einer unübersichtlichen Darstellung entstehen könnten.

Besonders vorteilhaft und intuitiv zu verwenden ist eine erfindungsgemäße Vorrichtung, wenn die Symbole für die Gebereingänge und/oder die Symbole für die Aktorausgänge, die auf der Anzeigeeinheit der Programmiereingabeeinheit verwendet werden, durch Symbole oder Bezeichnungen für die entsprechenden Geber und/oder Aktoren selbst dargestellt werden.

Bei einer solchen bevorzugten Ausführungsform kann auch durch Auswahl entsprechender Geber- bzw. Aktorsymbole für die Geber und Aktoren, die an die speicherprogrammierbare Steuerung angeschlossen werden sollen, Information über den jeweiligen Geber bzw. Aktor zum Beispiel aus einer Speicherbibliothek abgerufen werden, um die Anschlüsse der speicherprogrammierbaren Steuerung, an der die ausgewählten Geber bzw. die ausgewählten Aktoren angeschlossen werden sollen, entsprechend der in dem Speicher abgelegten Information zu konfigurieren.

Auch für die Anzeigeeinheit zur Darstellung der Matrix, aus der die mögliche Einflussnahme der Gebereingänge auf die Aktorausgänge abgelesen werden kann, ist es von besonderem Vorteil, wenn die Gebereingänge und/oder die Aktorausgänge durch Symbole bzw. Bezeichnungen angegeben werden, die den an die Gebereingänge bzw. Aktorausgänge anzuschließenden Gebern bzw. Aktoren entsprechen.

Grundsätzlich kann die Erstellung des Programms für die speicherprogrammierbare Steuerung mit Hilfe einer Programmiereingabeeinheit, auf der Symbole, Programmmodule und Ein- und Ausgänge dargestellt werden, auf verschiedene Weise realisiert werden. Eine besonders einfache und intuitive Methode umfasst das Drag-and-Drop-Verfahren, bei dem mit Hilfe zum Beispiel einer Computermaus Symbole auf dem Bildschirm angeklickt und an die gewünschte Stelle in einem Programmierbereich der Anzeigeeinheit verschoben werden.

Es kann vorgesehen sein, in einer erfindungsgemäßen Matrixdarstellung alle Eingänge und Ausgänge der speicherprogrammierbaren Steuerung beziehungsweise die daran anzuschließenden Geber und Aktoren aufzunehmen. Es kann jedoch sinnvoll sein, in einer solchen Matrix, die mögliche Beeinflussungen der Ausgangssignale durch die Eingangssignale darstellt, nur eine Auswahl der Eingänge der speicherprogrammierbaren Steuerung beziehungsweise der daran anzuschließenden Geber darzustellen, um die Übersichtlichkeit nicht zu verlieren. Insbesondere bei einer Sicherheitssteuerung kann es zum Beispiel sinnvoll sein, nur solche Eingänge und ihren Einfluss auf mögliche Ausgänge der Sicherheitssteuerung zu betrachten, die mit sicherheitsrelevanter Information von Gebern versorgt werden.

Andererseits kann es ebenso sinnvoll sein, zum Beispiel nur solche Ausgänge zu betrachten und in der Matrix anzuzeigen, die mit sicherheitsrelevanten Aktoren zusammenhängen.

Die Anzeige der Programmiereingabeeinheit, auf der die Symbole zusammengestellt werden, um das Programm für die speicherprogrammierbare Steuerung zu erstellen, und die Anzeigeeinheit zur Darstellung der Matrix, die die Information enthält, auf welche Ausgänge der speicherprogrammierbaren Steuerung ein bestimmtes Eingangssignal Einfluss hat, können unterschiedliche Ausgabegeräte sein. Besonders vorteilhaft ist es jedoch, wenn die Darstellung in einem gemeinsamen Display, zum Beispiel einem Bildschirm, stattfindet.

Vorteilhafterweise lässt sich die Darstellung der Matrix mit Hilfe einer gegebenenfalls zusätzlich vorgesehenen Ausgabeeinheit, vorzugsweise einem Drucker, darstellen, um die Zusammenhänge dauerhaft zur Verfügung zu haben.

Die Aufgabe wird hinsichtlich der Programmiereinrichtung mit einer Programmiereinrichtung für eine speicherprogrammierbare Steuerung mit den Merkmalen des Anspruchs 8 gelöst, die eine erfindungsgemäße Vorrichtung zur Erstellung eines Programms für die speicherprogrammierbare Steuerung umfasst. Außerdem weist die erfindungsgemäße Programmiereinrichtung eine Schnittstelle zum Anschluss der zu programmierenden speicherprogrammierbaren Steuerung und zur Übertragung des Programmcodes an die speicherprogrammierbare Steuerung auf. Mit Hilfe einer solchen Programmiereinrichtung kann zunächst das Programm für die speicherprogrammierbare Steuerung erstellt werden und in einer erfindungsgemäßen Matrix dargestellt werden. Das Programm kann dann über die Schnittstelle an die speicherprogrammierbare Steuerung übertragen werden.

Hinsichtlich des Verfahrens wird die Aufgabe durch ein Verfahren zur Programmierung einer speicherprogrammierbaren Steuerung mit den Merkmalen des Anspruchs 9 gelöst.

Die Vorteile eines erfindungsgemäßen Verfahrens ergeben sich aus den oben bereits geschilderten Vorteilen für die erfindungsgemäße Vorrichtung und die erfindungsgemäße Programmiereinrichtung.

Vorteilhafte Ausgestaltungen des erfindungsgemäßen Verfahrens sind Gegenstand von Unteransprüchen. Die Vorteile derartiger bevorzugter Ausgestaltungen ergeben sich aus den oben geschilderten Vorteilen besonderer Ausführungsformen der erfindungsgemäßen Vorrichtung.

Die Erfindung umfasst weiterhin ein Computerprogrammprodukt zur Verwendung mit einer erfindungsgemäßen Vorrichtung, einer erfindungsgemäßen Programmiereinrichtung oder einem erfindungsgemäßen Verfahren. Das erfindungsgemäße Computerprogrammprodukt ist derart ausgestaltet, dass es bei Ausführung auf einem Computer die aus dem erstellten Programmcode oder der auf der Anzeige der Programmiereingabeeinheit zusammengestellten Anordnung von Symbolen resultierende mögliche Einflussnahme von Eingangssignalen, die von den Gebereingängen an die speicherprogrammierbare Steuerung geliefert werden, auf Ausgangssignale, die von der speicherprogrammierbaren Steuerung an die Aktorausgänge geliefert werden, ermittelt und in Form einer Matrix anzeigt.

Ein solches Computerprogrammprodukt kann zum Beispiel ein Computerprogramm mit Programmschritten sein, die die Darstellung der Matrix aus der Konfigurierung der speicherprogrammierbaren Steuerung bewirken. Ebenso kann das erfindungsgemäße Computerprogrammprodukt ein Speichermedium mit einem entsprechenden, darauf gespeicherten Computerprogramm sein.

Die Erfindung wird anhand der beiliegenden schematischen Figuren im Detail erläutert, die eine Ausführungsform der erfindungsgemäßen Vorrichtung zeigen.
- Fig. 1a: zeigt den Programmierbereich einer Anzeigeeinheit einer Programmiereingabeeinheit einer erfindungsgemäßen Vorrichtung zur Erstellung eines Programms für eine speicherprogrammierbare Steuerung mit einem Programmierbeispiel.
- Fig. 1b: zeigt das Beispiel in einer bestimmten Darstellungsform.
- Fig. 2a: zeigt die Programmierung mit Hilfe eines Drag-and-Drop-Verfahrens, anhand des in Fig. 1a gezeigten Programmierbeispiels.
- Fig. 2b: zeigt die Programmierung mit Hilfe des Drag-and-Drop-Verfahrens, anhand der in Fig. 1b gezeigten Darstellungsform.
- Fig. 3a: zeigt eine aus dem in Fig. 1 dargestellten Programmierungsbeispiel resultierende Matrixdarstellung.
- Fig. 3b: zeigt ein Beispiel für eine bestimmte Darstellungsform der Matrix.
- Fig. 4: zeigt eine andere Programmierung einer speicherprogrammierbaren Steuerung.
- Fig. 5: zeigt die daraus resultierende Matrixdarstellung.
- Fig. 6: zeigt ein weiteres Beispiel einer Programmierung einer speicherprogrammierbaren Steuerung.
- Fig. 7: zeigt die daraus resultierende Matrixdarstellung.
- Fig. 8: zeigt eine Matrixdarstellung mit reduziertem Umfang.

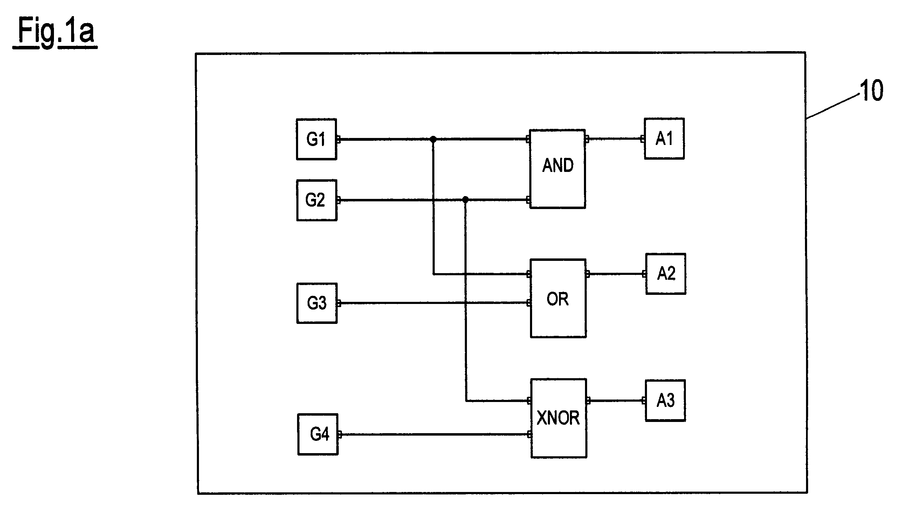

In Fig. 1a ist das Beispiel einer Programmierung einer speicherprogrammierbaren Sicherheitssteuerung auf dem Programmierbereich 10 eines Bildschirms dargestellt. Hier sind vier Geber an Gebereingängen G1, G2, G3, G4 der speicherprogrammierbaren Steuerung anzuschließen. Drei Aktoren sind an Aktorausgängen A1, A2, A3 der speicherprogrammierbaren Sicherheitssteuerung anzuschließen.

Unterschiedliche Programmmodule, hier die logischen Verknüpfungen AND, OR, und XNOR in der Notation gemäß Boole'scher Algebra, sind hier beispielsweise vorgesehen, um die Signale der einzelnen Geber miteinander zu verknüpfen und entsprechende Ausgangssignale für die Aktoren zu erzeugen. Dazu sind zwischen den Gebern, den logischen Verknüpfungen und den Ausgängen entsprechende Verbindungslinien angezeigt.

Die Programmmodule sind nicht auf einzelne logische Verknüpfungen beschränkt. Es kann sich bei den Programmmodulen auch um vorprogrammierte Programmteile, Funktionsbausteine oder Makros handeln, die in einer entsprechenden Speicherbibliothek abgelegt sein können.

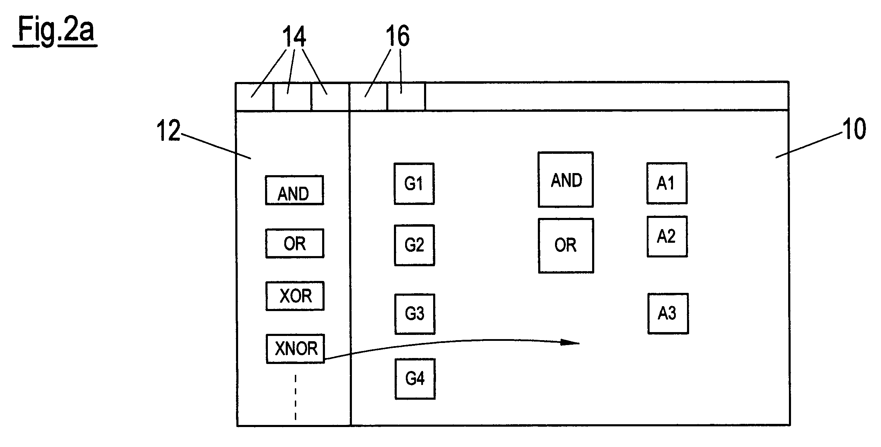

Fig. 2a zeigt einen Schritt der Herstellung des Programms, das auf dem Programmierbereich 10 des Bildschirms in Fig. 1a dargestellt ist.

Fig. 2a zeigt dabei unter anderem den Bildschirmbereich 10, in dem das fertige Programm graphisch dargestellt werden soll. In einem Bildschirmbereich 12 können die unterschiedlichen Komponenten angezeigt werden, die für die Erstellung des Programms ausgewählt werden können. Im Bildschirmbereich 14 sind dazu in einem Menü Auswahlicons angezeigt, die zum Beispiel mit Hilfe einer Computermaus angeklickt werden können, um anzugeben, ob zum Beispiel gerade die Geber, die Verknüpfungen oder die Aktoren ausgewählt werden sollen. Im vorliegenden Beispiel werden gerade die Verknüpfungen angelegt. Um die Verknüpfungen auswählen zu können, wurde ein entsprechendes Feld 14 angeklickt, das für den Bildschirmbereich 12 die Darstellung der auswählbaren Verknüpfungen veranlasst.

In dem Bildschirmbereich 10 sind bereits die Symbole für eine AND-Verknüpfung und eine OR-Verknüpfung vorhanden. Eine dritte Verknüpfung (hier XNOR) wird gewünscht. Sie wird im linken Bildschirmbereich 12 angeklickt und mit der Computermaus in den Bildschirmbereich 10 zur Programmierung verschoben.

In dem Programmierbereich 10 des Bildschirms sind bereits die Symbole für vier unterschiedliche Gebereingänge G1, G2, G3 und G4 vorhanden. Es kann sich dabei zum Beispiel um Eingänge für die Signale von Sensoren oder Schaltern handeln, deren Stellung für die speicherprogrammierbare Steuerung von Bedeutung sind. Außerdem sind bereits drei unterschiedliche Aktorausgänge A1, A2 und A3 ausgewählt, mit denen die speicherprogrammierbare Steuerung mit entsprechenden Aktoren verbunden werden sollen. Es kann sich dabei zum Beispiel um Ventile, Warnlampen oder Stoppsignale für Maschinen handeln.

Nach dem in Fig. 2a dargestellten Programmierschritt werden die Verbindungspfade zwischen den einzelnen Gebereingängen, den logischen Verknüpfungen und den Aktorausgängen auf dem Bildschirmbereich 10 erstellt, um so die graphische Darstellung gemäß Fig. 1a erhalten.

Gebereingänge der speicherprogrammierbaren Steuerung werden nach den anzuschließenden Gebern ausgewählt, so dass der jeweilige Eingang bei der Programmierung der speicherprogrammierbaren Steuerung bereits durch entsprechende gegebenenfalls in einem Speicher abgelegte Software konfiguriert werden kann. Genauso wird mit den Aktoren und den entsprechenden Aktorausgängen vorgegangen.

Insofern ist es sehr intuitiv, wenn die Gebereingänge einfach durch die anzuschließenden Geber und die Aktorausgänge einfach durch die anzuschließenden Aktoren dargestellt und ausgewählt werden. Dies sei an einem Beispiel erläutert. An die Gebereingänge G1 und G2 sollen zum Beispiel ein erster und ein zweiter Notausschalter angeschlossen werden. An die Gebereingänge G3 und G4 sollen die Signale von Sensoren über den Öffnungszustand einer ersten und einer zweiten Fluchttüre angeschlossen werden. An der entsprechenden Stelle des Programmierbereiches 10 würden dann Symbole für den ersten und den zweiten Notausschalter und Symbole für die Sensoren des Öffnungszustandes der ersten und der zweiten Fluchttüre angezeigt werden. An die Aktorausgänge A1 bis A3 sollen zum Beispiel ein erstes und ein zweites Ventil und eine Warnlampe angeschlossen werden. Die Symbole A1, A2 und A3 in dem Programmierbereich 10 würden dann die Symbole oder Bezeichnungen für das erste und das zweite Ventil bzw. die Warnlampe enthalten.

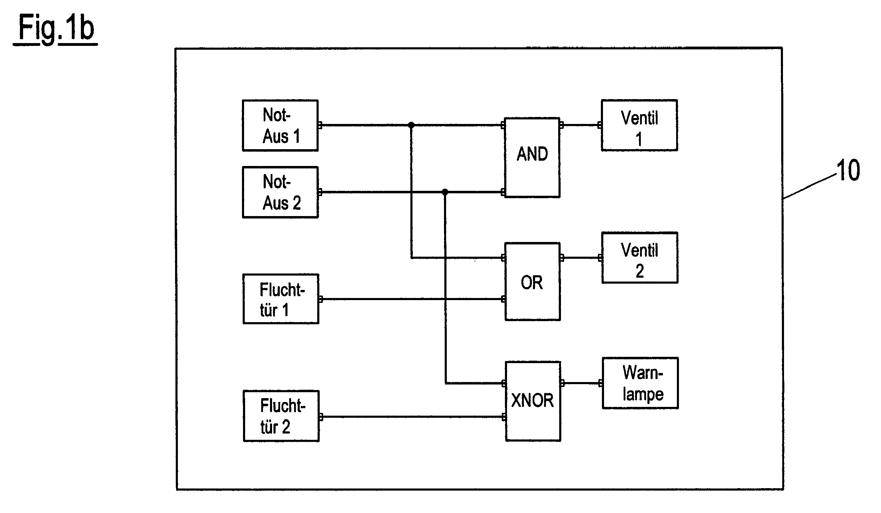

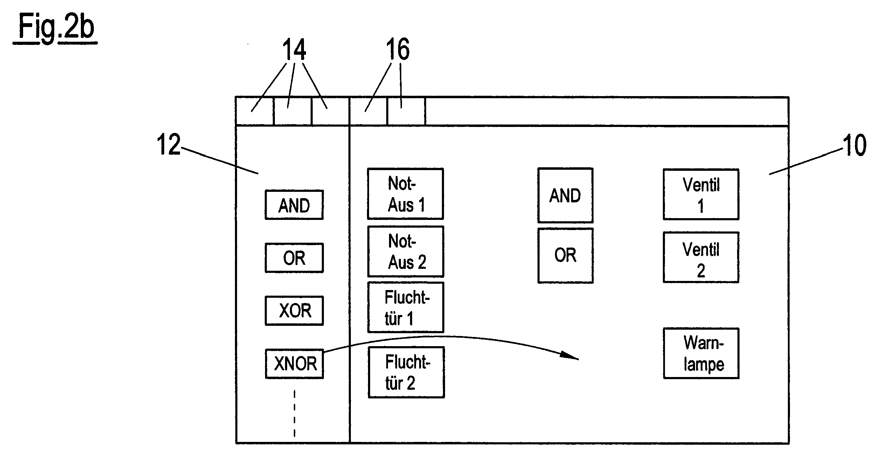

Diese Darstellungsform ist für das Programmierbeispiel der Fig. 1a und 2a in Fig. 1b bzw. 2b gezeigt. Ansonsten ist die Funktionsweise gleich.

Aus der Darstellung des Programms durch die Symbole wird dann in an sich bekannter Weise ein Programm für die speicherprogrammierbare Steuerung erzeugt. Dabei wird aus den Symbolen für die ausgewählten Gebereingänge und ausgewählten Aktorausgänge bzw. die ausgewählten Geber und ausgewählten Aktoren auch ermittelt, wie die Ein- bzw. Ausgänge der speicherprogrammierbaren Steuerung konfiguriert sein müssen, um mit den entsprechenden Gebern bzw. Aktoren zusammenwirken zu können. Damit sind die Gebereingänge G1 bis G4 und die Aktorausgänge A1 bis A3 für die entsprechenden Geber und Aktoren individualisiert.

Das auf diese Weise erstellte Programm kann dann über eine entsprechende, nicht dargestellte, Schnittstelle an die speicherprogrammierbare Steuerung übertragen werden, um diese zu programmieren. Damit ist innerhalb der speicherprogrammierbaren Steuerung festgelegt, welche Eingänge mit welchen Ausgängen auf welche Weise logisch verknüpft sind. Es können dann die entsprechenden Geber und Aktoren angeschlossen werden, um den Betrieb zu ermöglichen.

Durch Auswahl entsprechender Icons 16 eines Menüs in der Bildschirmdarstellung der Fig. 2a bzw. Fig. 2b lässt sich auswählen, ob auf den Bildschirmbereich 10 zum Beispiel die logische Verknüpfungen dargestellt werden sollen, wie sie in Fig. 1a bzw. Fig. 1b sichtbar ist, oder eine andere Darstellung.

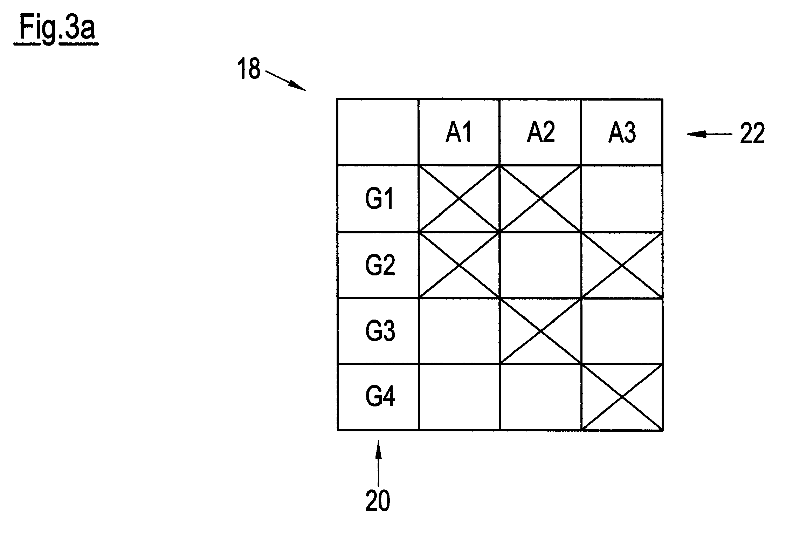

Eine solche andere Darstellung ist in Fig. 3a gezeigt. Hier wird erfindungsgemäß eine Matrix angezeigt, in der angegeben ist, welcher Gebereingang Einfluss auf welchen Aktorausgang hat. Die Gebereingänge sind in der Spalte 20 und die Aktorausgänge in der Zeile 22 angegeben.

In der Matrix ist erkennbar, dass das Signal des Gebereingangs G1 Einfluss auf den Aktorausgang A1 und den Aktorausgang A2 hat, wie es sich auch aus der Darstellung in Fig. 1 ergibt. Der Gebereingang G2 hat Einfluss auf die Aktorausgänge A1 und A3. Der Gebereingang G3 hat nur Einfluss auf den Aktorausgang A2 und der Geber G4 hat nur Einfluss auf den Aktorausgang A3.

Mit Hilfe dieser Matrix ist es für den Anwender auf einfache Weise möglich zu erkennen, ob eine Änderung eines Eingangssignals an der speicherprogrammierbaren Steuerung, zum Beispiel des Gebereingangs G1 Einfluss auf einen ganz bestimmten Aktor hat, der an einem bestimmten Aktorausgang der speicherprogrammierbaren Steuerung angeschlossen ist.

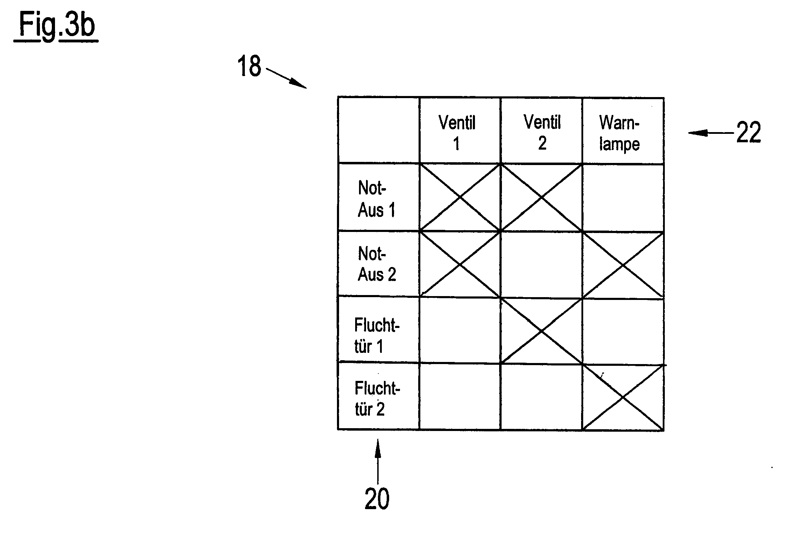

Die jeweiligen Gebereingänge und Aktorausgänge können in dieser Matrix zum Beispiel ebenfalls durch die Symbole oder Bezeichnungen repräsentiert werden, die den anzuschließenden Gebern oder Aktoren entsprechen. Für das oben beschriebene Beispiel, in dem die Gebereingänge G1, G2, G3, G4 mit einem ersten und einem zweiten Notausschalter und dem Signal einer ersten und einer zweiten Fluchttüre verbunden werden sollen und die Aktorausgänge A1, A2, A3 mit einem ersten und einem zweiten Ventil und einer Warnlampe verbunden werden sollen, ergibt sich eine konkrete Matrixdarstellung gemäß Fig. 3b.

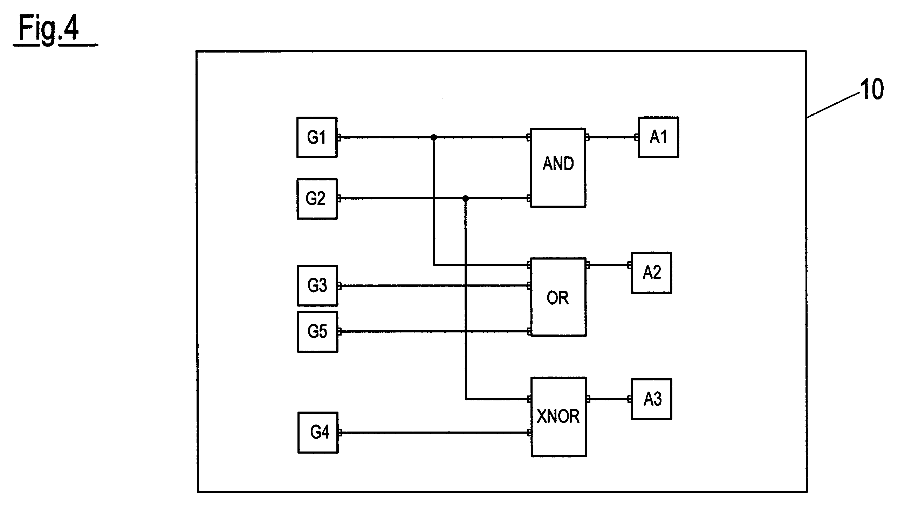

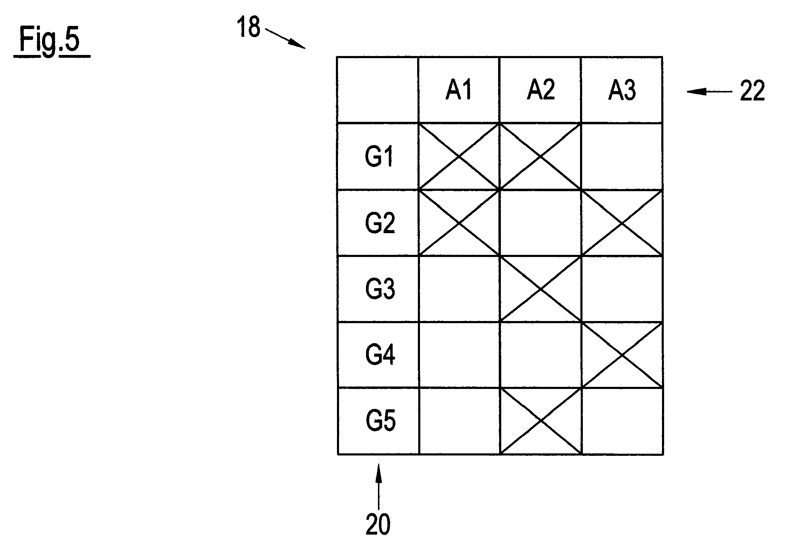

Fig. 4 zeigt ein anderes Programmierbeispiel für ein Programm für eine speicherprogrammierbare Steuerung. Hier ist ein zusätzlicher Geber vorgesehen, der an den Gebereingang G5 angeschlossen werden soll und über die logische "OR"-Verknüpfung mit dem Aktorausgang A2 verbunden ist. Dieser Gebereingang G5 wird ebenfalls in der Matrixdarstellung aufgenommen, wobei hier dargestellt ist, dass er nur auf den Aktorausgang A2 Einfluss hat. Die entsprechende Matrix ist Gegenstand der Fig. 5.

Bei der Programmierung wird wiederum in an sich bekannter Weise der Gebereingang G5 derart konfiguriert, dass er mit dem ausgewählten Geber zusammenarbeiten kann.

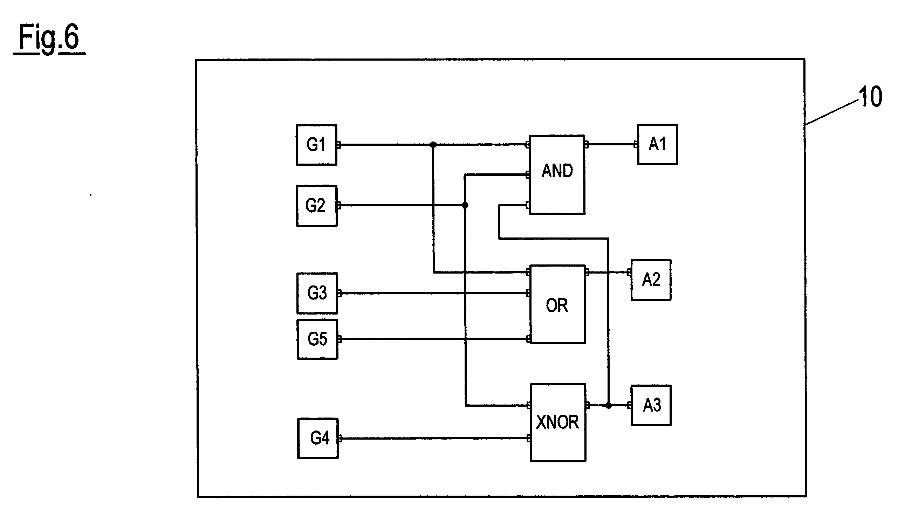

Fig. 6 zeigt ein weiteres Beispiel für die Programmierung einer speicherprogrammierbaren Steuerung. Hier ist der Ausgang der XNOR-Verknüpfung nicht nur mit dem Aktorausgang A3, sondern auch mit der im oberen Teil erkennbaren AND-Verknüpfung verbunden. Auf diese Weise hat auch der Gebereingang G4 über die XNOR-Verknüpfung und die AND-Verknüpfung Einfluss auch auf den Aktorausgang A1.

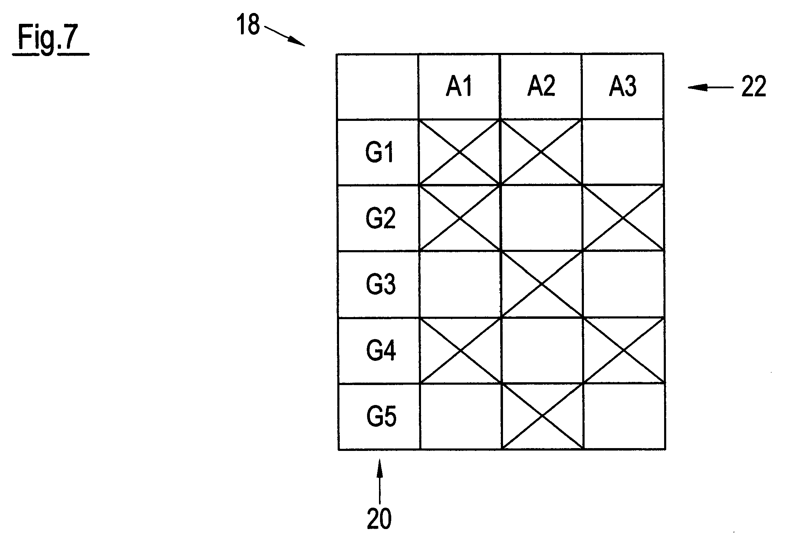

Dies ist in der Matrixdarstellung der Fig. 7 erkennbar, die dem Nutzer diese Information auf klare Weise anzeigt.

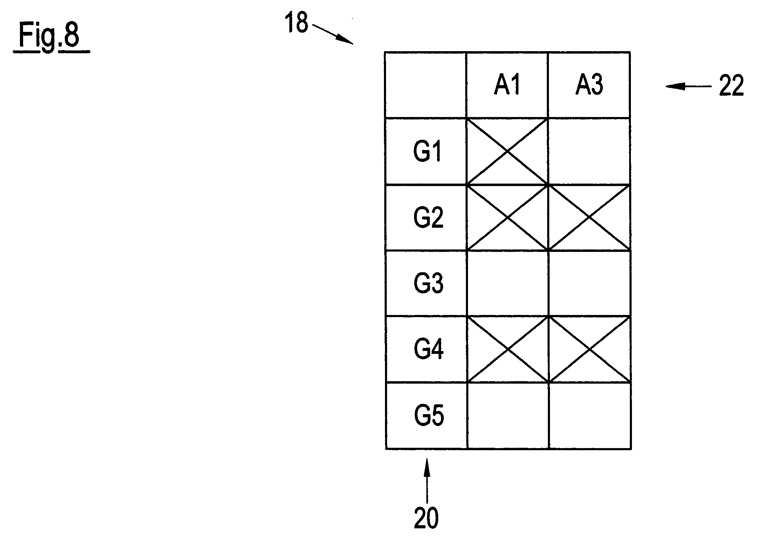

Fig. 8 zeigt eine besondere Matrixdarstellung ausgehend von dem graphisch dargestellten Programm der Fig. 6. Zum Beispiel sei der am Aktorausgang A2 anzuschließende Aktor hier kein sicherheitsrelevanter Aktor, also zum Beispiel ein Aktor, der nur eine Hintergrundbeleuchtung oder ähnliches betätigt.

Wenn der Nutzer nur daran interessiert ist, auf welche sicherheitsrelevanten Aktorausgänge ein Geber Einfluss haben kann, kann er zum Beispiel die Anzeige des Aktorausgangs A2 in der Matrixdarstellung unterbinden. Auf diese Weise kann er zum Beispiel die sicherheitsrelevante Information herausfiltern um diese wichtige Information schneller erfassen zu können.

Die erfindungsgemäße Matrixdarstellung ermöglicht also einen einfachen Überblick, welcher Geber, der an die Sicherheitssteuerung angeschlossen ist, auf welchen Aktor, der an die Sicherheitssteuerung angeschlossen ist, Einfluss haben kann. Dazu werden die entsprechenden Gebereingänge und Aktorausgänge der Sicherheitssteuerung in einer Matrixdarstellung dargestellt und die mögliche Einflussnahme markiert.

Die in den Figuren gezeigten Beispiele dienen nur zur Illustration. Tatsächlich werden in der Regel an eine speicherprogrammierbare Steuerung eine sehr viel größere Anzahl von Gebern und eine sehr viel größere Anzahl von Aktoren angeschlossen und durch das Programm in der speicherprogrammierbaren Steuerung miteinander verkoppelt. Wenn ein solches Programm in der Darstellung zum Beispiel der Fig. 1, der Fig. 4 oder der Fig. 6 dargestellt ist, sind die einzelnen Zusammenhänge schwer zu erkennen, da eine große Anzahl von Verknüpfungsoperatoren und Verbindungen dargestellt werden. Eine Reduzierung der Darstellung auf eine Matrixdarstellung entsprechend zum Beispiel den Fig. 3, 5, 7 oder 8 lässt auch bei einer komplexen Programmierung und einer viele Eingänge mit vielen Ausgängen verknüpfenden speicherprogrammierbaren Steuerung leicht erfassen, welcher Geber über einen entsprechenden Gebereingang der speicherprogrammierbaren Steuerung welchen Aktor über einen entsprechenden Aktorausgang der speicherprogrammierbaren Steuerung beeinflussen kann.

### Bezugszeichenliste

- 10: Programmier-Bildschirmbereich
- 12: Auswahl-Bildschirmbereich
- 14, 16: Auswahlicons
- 20: Matrixspalte für die Gebereingänge
- 22: Matrixzeile für die Aktorausgänge
- G1, G2, G3, G4, G5: Gebereingänge der speicherprogrammierbaren Steuerung
- A1, A2, A3: Aktorausgänge der speicherprogrammierbaren Steuerung

## Patentansprüche

1. Vorrichtung zur Erstellung eines Programms für eine speicherprogrammierbare Steuerung mit mehreren Eingängen und Ausgängen, die folgendes umfasst:
- eine Programmiereingabeeinheit mit einer Anzeigeeinheit (10) zur Auswahl und Zusammenstellung von mehreren Symbolen, die zumindest Symbole für
(i) Gebereingänge, über die Eingangssignale von Gebern an die speicherprogrammierbare Steuerung geliefert werden,
(ii) Aktorausgänge, über die Ausgangssignale von der speicherprogrammierbaren Steuerung an Aktoren geliefert werden,
(iii) vordefinierte Programmmodule und
(iv) Signal-Verbindungspfade
umfassen, und
- einer Erstellungseinheit zur Erstellung eines Programmcodes für die speicherprogrammierbare Steuerung aus einer auf der Anzeigeeinheit (10) der Programmiereingabeeinheit zusammengestellten Anordnung von Symbolen,
**gekennzeichnet durch**
- eine Ermittlungseinheit zur Ermittlung der aus dem erstellten Programmcode oder der auf der Anzeigeeinheit (10) der Programmiereingabeeinheit zusammengestellten Anordnung von Symbolen resultierenden möglichen Einflussnahme von Eingangssignalen, die von den Gebereingängen (G1, G2, G3, G4, G5) an die speicherprogrammierbare Steuerung geliefert werden, auf Ausgangssignale, die von der speicherprogrammierbaren Steuerung an die Aktorausgänge (A1, A2, A3) geliefert werden, wobei die Einflussnahme angibt, welche Eingangssignale in die speicherprogrammierbare Steuerung gemäß dem Programmcode oder der auf der Anzeigeeinheit (10) zusammengestellten Anordnung von Symbolen auf welche Ausgangssignale der speicherprogrammierbaren Steuerung Einfluss haben können,
- eine Umsetzungseinheit zur Umsetzung der möglichen Einflussnahme in eine Matrix und
- eine Anzeigeeinheit zur Darstellung der Matrix (18).

2. Vorrichtung nach Anspruch 1, **dadurch gekennzeichnet, dass** sie eine Vorrichtung zur Erstellung eines Programms für eine speicherprogrammierbare Sicherheitssteuerung ist.

3. Vorrichtung nach einem der Ansprüche 1 oder 2, **dadurch gekennzeichnet, dass** die Gebereingänge (G1, G2, G3, G4, G5) und die Aktorausgänge (A1, A2, A3) auf der Anzeigeeinheit (10) der Programmiereingabeeinheit und/oder der Anzeigeeinheit zur Darstellung der Matrix (18) durch Symbole für die Geber und Aktoren angezeigt werden.

4. Vorrichtung nach einem der Ansprüche 1 bis 3, **dadurch gekennzeichnet, dass** die Programmiereingabeeinheit derart ausgestaltet ist, dass die Auswahl und Zusammenstellung der Symbole mit einem Drag-and-Drop-Verfahren durchgeführt werden kann.

5. Vorrichtung nach einem der Ansprüche 1 bis 4, **gekennzeichnet durch** eine erste Auswahleinrichtung zur Bildung einer Auswahl von in der Matrix darzustellenden Aktorausgängen (A1, A2, A3) und/oder eine zweite Auswahleinrichtung zur Bildung einer Auswahl von in der Matrix darzustellenden Gebereingängen (G1, G2, G3, G4, G5).

6. Vorrichtung nach einem der Ansprüche 1 bis 5, **dadurch gekennzeichnet, dass** die Anzeigeeinheit der Programmiereingabeeinheit und die Anzeigeeinheit zur Darstellung der Matrix ein gemeinsames Display (10) umfassen.

7. Vorrichtung nach einem der Ansprüche 1 bis 6, **dadurch gekennzeichnet, dass** die Anzeigeeinheit zur Darstellung der Matrix (18) eine Ausgabeeinheit, vorzugsweise einen Drucker, umfasst.

8. Programmiereinrichtung für eine speicherprogrammierbare Steuerung mit einer Vorrichtung zur Erstellung eines Programms gemäß einem der Ansprüche 1 bis 7 und einer Schnittstelle zum Anschluss der zu programmierenden speicherprogrammierbaren Steuerung und zur Übertragung des erstellten Programmcodes an die speicherprogrammierbare Steuerung.

9. Verfahren zur Programmierung einer speicherprogrammierbaren Steuerung mit folgenden Schritten:
- Auswählen und Zusammenstellen von Symbolen auf einer Anzeigeeinheit (10) einer Programmiereingabeeinheit, die zumindest Symbole für
(i) Gebereingänge, über die Eingangssignale von Gebern an die speicherprogrammierbare Steuerung geliefert werden,
(ii) Aktorausgänge, über die Ausgangssignale von der speicherprogrammierbaren Steuerung an Aktoren geliefert werden,
(iii) vordefinierte Programmmodule und
(iv) Signal-Verbindungspfade
umfassen, gemäß einer gewünschten Programmierung,
- Erstellen eines Programmcodes für die speicherprogrammierbare Steuerung aus der auf der Anzeigeeinheit (10) der Programmiereingabeeinheit zusammengestellten Anordnung von Symbolen und
- Übertragen des Programmcodes an eine speicherprogrammierbare Steuerung,
**dadurch gekennzeichnet, dass**
die aus dem Programmcode oder der auf der Anzeige der Programmiereingabeeinheit (10) zusammengestellten Anordnung von Symbolen resultierenden möglichen Einflussnahme von Eingangssignalen, die von den Gebereingängen (G1, G2, G3, G4, G5) an die speicherprogrammierbare Steuerung geliefert werden, auf Ausgangssignale, die von der speicherprogrammierbaren Steuerung an die Aktorausgänge (A1, A2, A3) geliefert werden, ermittelt und in Form einer Matrix (18) angezeigt werden, wobei die Einflussnahme angibt, welche Eingangssignale der speicherprogrammierbaren Steuerung gemäß dem Programmcode oder der auf der Anzeigeeinheit (10) zusammengestellten Anordnung von Symbolen auf welche Ausgangssignale der speicherprogrammierbaren Steuerung Einfluss haben können.

10. Verfahren nach Anspruch 9, **dadurch gekennzeichnet, dass** es ein Verfahren zur Programmierung einer speicherprogrammierbaren Sicherheitssteuerung ist.

11. Verfahren nach einem der Ansprüche 9 oder 10, **dadurch gekennzeichnet, dass** die Gebereingänge (G1, G2, G3, G4, G5) und die Aktorausgänge (A1, A2, A3) auf der Anzeigeeinheit (10) der Programmiereingabeeinheit und/ oder der Anzeigeeinheit zur Darstellung der Matrix (18) durch Symbole für die Geber und Aktoren angezeigt werden.

12. Verfahren nach einem der Ansprüche 9 bis 11, **dadurch gekennzeichnet, dass** in der Matrix (10) nur ausgewählte Gebereingänge (G1, G2, G3, G4, G5) und/oder nur ausgewählte Aktorausgänge (A1, A3) angezeigt werden.

13. Verfahren nach Anspruch 12, **dadurch gekennzeichnet, dass** die Gebereingänge, die in der Matrix dargestellt werden, danach ausgewählt werden, ob über sie sicherheitsrelevante Signale an die zu programmierende speicherprogrammierbare Sicherheitssteuerung übermittelt werden.

14. Verfahren nach einem der Ansprüche 12 oder 13, **dadurch gekennzeichnet, dass** die Aktorausgänge, die in der Matrix dargestellt werden, danach ausgewählt werden, ob über sie sicherheitsrelevante Signale von der zu programmierenden speicherprogrammierbaren Steuerung übermittelt werden.

15. Computerprogrammprodukt zur Verwendung mit einer Vorrichtung zur Erstellung eines Programms für eine speicherprogrammierbare Steuerung gemäß einem der Ansprüche 1 bis 7 oder einer Programmiereinrichtung für eine speicherprogrammierbare Steuerung gemäß Anspruch 8, das bei Ausführung auf einem Computer das Verfahren zur Programmierung einer speicherprogrammierbaren Steuerung gemäß einem der Ansprüche 9 bis 14 ausführt.

## Claims

1. An apparatus for the generation of a program for a programmable logic controller having a plurality of inputs and outputs which includes the following:
- a programming input unit having a display unit (10) for the selection and compilation of a plurality of symbols, which at least includes symbols for
(i) transmitter inputs via which input signals from transmitters are delivered to the programmable logic controller,
(ii) actuator outputs via which output signals are delivered from the programmable logic controller to actuators,
(iii) predefined program modules and
(iv) signal connection paths
and
- a generation unit for the generation of a program code for the programmable logic controller from an arrangement of symbols compiled at the display unit (10) of the programming input unit, **characterized by**
- a determination unit for determining the possible influence, which results from the generated program code or from the arrangement of symbols compiled at the display unit (10) of the programming input unit, of input signals which are delivered from the transmitter inputs (G1, G2, G3, G4, G5) to the programmable logic controller on output signals which are delivered by the programmable logic controller to the actuator outputs (A1, A2, A3), with the influence indicating which input signals into the programmable logic controller can have an influence on which output signals of the programmable logic controller in accordance with the program code or the arrangement of symbols compiled at the display unit (10),
- an implementation unit for implementing the possible influence in a matrix and
- a display unit for the display of the matrix (18).

2. An apparatus in accordance with claim 1, **characterized in that** it is an apparatus for the generation of a program for a memory programmable safety controller.

3. An apparatus in accordance with one of the claims 1 or 2, **characterized in that** the transmitter inputs (G1, G2, G3, G4, G5) and the actuator outputs (A1, A2, A3) are displayed at the display unit (10) of the programming input unit and/or are indicated to the display unit for the display of the matrix (18) by symbols for the transmitters and actuators.

4. An apparatus in accordance with any one of the claims 1 to 3, **characterized in that** the programming input unit is configured such that the selection and compilation of the symbols can be carried out by means of a drag and drop process.

5. An apparatus in accordance with any one of the claims 1 to 4, **characterized by** a first selector for the formation of a selection of actuator outputs (A1, A2, A3) to be displayed in the matrix and/or by a second selector for the formation of a selection of transmitter inputs (G1, G2, G3, G4, G5) to be displayed in the matrix.

6. An apparatus in accordance with any one of the claims 1 to 5, **characterized in that** the display unit of the programming input unit and the display unit for the display of the matrix include a common display (10).

7. An apparatus in accordance with any one of the claims 1 to 6, **characterized in that** the display unit for the display of the matrix (18) includes an output unit, preferably a printer.

8. A programming device for a programmable logic controller having an apparatus for the generation of a program in accordance with any one of the claims 1 to 7 and an interface for the connection of the programmable logic controller to be programmed and for the transfer of the generated program code to the programmable logic controller.

9. A method for programming a programmable logic controller having the following steps:
- selection and compilation of symbols at a display unit (10) of a programming input unit which at least includes symbols in accordance with a desired programming for
(i) transmitter inputs via which input signals of transmitters are delivered to the programmable logic controller,
(ii) actuator outputs via which output signals are delivered from the programmable logic controller to actuators,
(iii) predefined program modules and
(iv) signal connection paths,
- generation of a program code for the programmable logic controller from the arrangement of symbols compiled at the display unit (10) of the programming input unit and
- transfer of the program code to a programmable logic controller, **characterized in that**
the possible influence, which results from the program code or from the arrangement of symbols compiled at the display of the programming input unit (10), of input signals which are delivered from the transmitter inputs (G1, G2, G3, G4, G5) to the programmable logic controller on output signals which are delivered from the programmable logic controller to the actuator outputs (A1, A2, A3) is determined and displayed in the form of a matrix (18), with the influence indicating which input signals of the programmable logic controller can have an influence on which output signals of the programmable logic controller in accordance with the program code or the arrangement of symbols compiled at the display unit (10).

10. A method in accordance with claim 9, **characterized in that** it is a method for programming a safety programmable logic controller.

11. A method in accordance with one of the claims 9 or 10, **characterized in that** the transmitter inputs (G1, G2, G3, G4, G5) and the actuator outputs (A1, A2, A3) are displayed at the display unit (10) of the programming input unit and/or the display unit for the display of the matrix (18) by symbols for the transmitters and actuators.

12. A method in accordance with any one of the claims 9 to 11, **characterized in that** only selected transmitter inputs (G1, G2, G3, G4, G5) and/or only selected actuator outputs (A1, A3) are displayed in the matrix (10).

13. A method in accordance with claim 12, **characterized in that** the transmitter inputs, which are displayed in the matrix, are selected in accordance with whether safety relevant signals are transmitted via them to the safety programmable logic controller to be programmed.

14. A method in accordance with one of the claims 12 or 13, **characterized in that** the actuator outputs, which are displayed in the matrix, are selected in accordance with whether safety relevant signals are transmitted via them from the safety programmable logic controller to be programmed.

15. A computer program product for use with an apparatus for the generation of a program for a programmable logic controller in accordance with any of the claims 1 to 7 or with a programming device for a programmable logic controller in accordance with claim 8,
said computer program product executing the method for programming a programmable logic controller in accordance with any one of the claims 9 to 14 when executed on a computer.

## Revendications

1. Dispositif de création d'un programme pour une commande programmable par mémoire, comportant plusieurs entrées et plusieurs sorties, qui comporte :
- une unité d'entrée de programmation pourvue d'une unité d'affichage (10) pour sélectionner et assembler plusieurs symboles, qui comprennent au moins des symboles pour
(i) des entrées de capteur via lesquelles des signaux d'entrée de capteurs sont envoyés à la commande programmable par mémoire,
(ii) des sorties d'actionneur via lesquelles les signaux de sortie de la commande programmable par mémoire sont envoyés à des actionneurs,
(iii) des modules de programme prédéfinis, et
(iv) des voies de liaison de signaux
et
- une unité de création pour créer un code de programme pour la commande programmable par mémoire à partir d'un agencement de symboles assemblé sur l'unité d'affichage (10) de l'unité d'entrée de programmation,
**caractérisé par**
- une unité de détection pour détecter l'influence exercée possible de signaux d'entrée qui résulte du code de programme créé ou de l'agencement de symboles assemblé sur l'unité d'affichage (10) de l'unité d'entrée de programmation, signaux d'entrée qui sont envoyés par les entrées de capteur (G1, G2, G3, G4, G5) à la commande programmable par mémoire, ladite influence étant exercée sur des signaux de sortie qui sont envoyés de la commande programmable par mémoire aux sorties d'actionneur (A1, A2, A3), l'influence exercée indiquant quels des signaux d'entrée dans la commande programmable par mémoire selon le code de programme ou selon l'agencement de symboles assemblé sur l'unité d'affichage (10) peuvent avoir une influence sur quels des signaux de sortie de la commande programmable par mémoire,
- une unité d'implémentation pour implémenter l'influence exercée possible dans une matrice, et
- une unité d'affichage pour afficher la matrice (18).

2. Dispositif selon la revendication 1, **caractérisé en ce qu'**il est un dispositif pour créer un programme pour une commande de sécurité programmable par mémoire.

3. Dispositif selon l'une des revendications 1 ou 2, **caractérisé en ce que** les entrées de capteur (G1, G2, G3, G4, G5) et les sorties d'actionneur (A1, A2, A3) sur l'unité d'affichage (10) de l'unité d'entrée de programmation et/ou sur l'unité d'affichage pour afficher la matrice (18) sont affichées par des symboles pour les capteurs et pour les actionneurs.

4. Dispositif selon l'une des revendications 1 à 3, **caractérisé en ce que** l'unité d'entrée de programmation est réalisée de manière à pouvoir effectuer la sélection et l'assemblage des symboles avec un procédé dit glisser et déposer.

5. Dispositif selon l'une des revendications 1 à 4, **caractérisé par** un premier moyen de sélection pour faire une sélection de sorties d'actionneur (A1, A2, A3) à afficher dans la matrice, et/ou un second moyen de sélection pour faire une sélection d'entrées de capteur (G1, G2, G3, G4, G5) à afficher dans la matrice.

6. Dispositif selon l'une des revendications 1 à 5, **caractérisé en ce que** l'unité d'affichage de l'unité d'entrée de programmation et l'unité d'affichage pour afficher la matrice comprennent un écran d'affichage commun (10).

7. Dispositif selon l'une des revendications 1 à 6, **caractérisé en ce que** l'unité d'affichage pour afficher la matrice (18) comprend une unité de sortie, de préférence une imprimante.

8. Système de programmation pour une commande programmable par mémoire, comportant un dispositif pour créer un programme selon l'une des revendications 1 à 7 et une interface pour connecter la commande programmable par mémoire qui doit être programmée et pour transmettre le code de programme créé à la commande programmable par mémoire.

9. Procédé pour programmer une commande programmable par mémoire, comportant les étapes suivantes :
- on sélectionne et on assemble des symboles sur une unité d'affichage (10) d'une unité d'entrée de programmation qui comprend au moins des symboles pour
(i) des entrées de capteur via lesquelles des signaux d'entrée de capteurs sont envoyés à la commande programmable par mémoire,
(ii) des sorties d'actionneur via lesquelles les signaux de sortie de la commande programmable par mémoire sont envoyés à des actionneurs,
(iii) des modules de programme prédéfinis, et
(iv) des voies de liaison de signaux
selon une programmation désirée,
- on crée un code de programme pour la commande programmable par mémoire à partir d'un agencement de symboles assemblé sur l'unité d'affichage (10) de l'unité d'entrée de programmation,
et
- on transmet le code de programme à une commande programmable par mémoire,
**caractérisé en ce que**
l'on détecte et fait afficher en forme de matrice (18) l'influence exercée possible de signaux d'entrée qui résulte du code de programme ou de l'agencement de symboles assemblé sur l'unité d'affichage de l'unité d'entrée de programmation (10), signaux d'entrée qui sont envoyés depuis les entrées de capteur (G1, G2, G3, G4, G5) à la commande programmable par mémoire, ladite influence étant exercée sur des signaux de sortie qui sont envoyés de la commande programmable par mémoire aux sorties d'actionneur (A1, A2, A3), l'influence exercée indiquant quels des signaux d'entrée dans la commande programmable par mémoire selon le code de programme ou selon l'agencement de symboles assemblé sur l'unité d'affichage (10) peuvent avoir une influence sur quels des signaux de sortie de la commande programmable par mémoire.

10. Procédé selon la revendication 9, **caractérisé en ce qu'**il est un procédé pour programmer une commande de sécurité programmable par mémoire.

11. Procédé selon l'une des revendications 9 ou 10, **caractérisé en ce que** les entrées de capteur (G1, G2, G3, G4, G5) et les sorties d'actionneur (A1, A2, A3) sur l'unité d'affichage (10) de l'unité d'entrée de programmation et/ou sur l'unité d'affichage pour afficher la matrice (18) sont affichées par des symboles pour les capteurs et pour les actionneurs.

12. Procédé selon l'une des revendications 9 à 11, **caractérisé en ce qu'**uniquement des entrées de capteur sélectionnées (G1, G2, G3, G4, G5) et/ou uniquement des sorties d'actionneur sélectionnées (A1, A3) sont affichées dans la matrice (18).

13. Procédé selon la revendication 12, **caractérisé en ce que** les entrées de capteur qui sont illustrées dans la matrice sont sélectionnées en fonction de savoir si elles servent à la transmission de signaux pertinents en termes de sécurité à la commande de sécurité programmable par mémoire qui doit être programmée.

14. Procédé selon l'une des revendications 12 ou 13, **caractérisé en ce que** les sorties d'actionneur qui sont illustrées dans la matrice sont sélectionnées en fonction de savoir si elles servent à la transmission de signaux pertinents en termes de sécurité à la commande de sécurité programmable par mémoire qui doit être programmée.

15. Produit de programme d'ordinateur destiné à l'utilisation avec un dispositif pour créer un programme pour une commande programmable par mémoire selon l'une des revendications 1 à 7 ou avec un système de programmation pour une commande programmable par mémoire selon la revendication 8,
qui, en étant exécuté sur un ordinateur, met en oeuvre le procédé de programmation d'une commande programmable par mémoire selon l'une des revendications 9 à 14.
